# EUROPÄISCHE PATENTANMELDUNG

(11) **EP 0 693 754 A1**
(43) Veröffentlichungstag der Anmeldung: **24.01.1996**
(21) Anmeldenummer: 95107598.5
(22) Anmeldetag: 18.05.1995
(51) Int. Cl.: H01B 5/08

(54) **Selbsttragendes elektrisches Luftkabel**

(30) Priorität: 19.07.1994 DE 4425464
(71) Anmelder: Alcatel Kabel Beteiligungs-AG, D-30002 Hannover (DE)
(72) Erfinder: Hög, Georg, Dipl.-Ing., D-41065 Mönchengladbach (DE); Haag, Helmut, Dipl.-Phys., D-52445 Titz (DE)
(74) Vertreter: Mende, Eberhard, Dipl.-Ing.

(57) **Zusammenfassung**

Bei einem elektrischen Luftkabel mit im Verseilverband von elektrischen Leitern (3) und zugfesten Tragelementen (1; 2) angeordneten Lichtwellenleiterelementen aus optische Fasern (9) enthaltenden Röhrchen (4) mit einer metallischen Auflage ist diese Auflage eine in sich geschlossene Metallschicht (5) dünner Wandstärke, welche unmittelbar mit der Oberfläche des Röhrchens (4) in Verbindung steht.

## Beschreibung

Die vorliegende Erfindung betrifft ein selbsttragendes elektrisches Luftkabel mit im Verseilverband von elektrischen Leitern und zugfesten Tragelementen angeordneten Lichtwellenleiterelementen aus optische Fasern enthaltenden Röhrchen mit einer metallischen Auflage. Unter Luftkabel sollen in diesem Zusammenhang auch sogenannte Erdseile oder Phasenseile verstanden werden, wie sie für Hochspannungsfreileitungen verwendet werden.

Kabel der gattungsgemäßen Art sind seit langem bekannt, eine Ausführungsform (etz Bd. 112 (1991) Heft 10, Seite 482 und 483) beispielsweise zeigt ein solches Lichtwellenleiterluftkabel für Energiefreileitungen, bei dem eine Edelstahl-Bündelader für Luftkabel mit einem Korrosionsschutz ausgerüstet ist. Ein solcher Korrosionsschutz scheint notwendig, weil bei metallischem Kontakt zwischen austenitischem Edelstahl und den in Leiterseilen oder Luftkabeln eingesetzten Aluminium-, Aldrey-, Stalum- oder verzinkten Stahldrähten bei Vorhandensein eines wässrigen, chlorid- und sauerstoffhaltigen Elektrolyten, die Gefahr einer Kontaktkorrosion besteht. Um hier Abwehrmaßnahmen zu treffen, sieht das bekannte Luftkabel vor, die Stahl-Bündelader mit einer Aluminium-Auflage in Form zweier längseinlaufend aufgeklebter Aluminiumbänder von je 0,1 mm Dicke zu versehen. Dabei kommt es darauf an, mit der Auflage ein gleiches elektrisches Potential bei der Stahlbündelader sowie den mit dieser einen Verband bildenden Armierungsdrähte zu erreichen.

Abgesehen davon, daß diese bekannte Maßnahme einen sicheren Schutz schon deshalb nicht gewährleisten kann, weil die Bandkanten nicht dicht zu verschließen sind, die aufgeklebten Aluminiumbänder bei der Verseilung mit den elektrischen Leitern und den zugfesten metallischen Elementen beschädigt werden können, tragen die aufgeklebten Aluminiumbänder in der gewählten und auch benötigten Wanddicke auf, sie führen also zu einer erheblichen Vergrößerung des Außendurchmessers der Stahlbündelader oder zu einer Reduzierung der Anzahl der Lichtwellenleiter.

Ausgehend von diesem Stand der Technik liegt daher der Erfindung die Aufgabe zugrunde, einen sicheren Korrosionsschutz für den das Leiterseil oder das Luftkabel bildenden Verband aus optische Fasern enthaltenden Röhrchen, zugfesten Elementen und elektrischen Leitern sicherzustellen, darüber hinaus aber auch dafür zu sorgen, daß das Fasern enthaltende Röhrchen diffusionsdicht ist, d. h. die Betriebssicherheit der optischen Faser oder Fasern im Verseilverband zu gewährleisten.

Gelöst wird diese Aufgabe gemäß der Erfindung dadurch, daß die Auflage eine in sich geschlossene Metallschicht dünner Wandstärke ist, welche unmittelbar mit der Oberfläche des Röhrchens in Verbindung steht. Eine solche metallische Auflage in unmittelbarer Verbindung mit der Oberfläche des Röhrchens führt gegenüber der bekannten Maßnahme zu einer Verringerung des Außendurchmessers, im Falle von Metallröhrchen gewährleistet die in sich geschlossene Metallschicht einen sicheren Korrosionsschutz. Potentialdifferenzen zwischen der Oberfläche des Röhrchens und den umgebenden Leitersträngen oder zugfesten Elementen sind vermieden. Für den Fall, daß die optischen Fasern im Innern von Kunststoffröhrchen, beispielsweise auch glasfaserverstärkten Kunststoffröhrchen untergebracht sind, bildet die erfindungsgemäß eingesetzte geschlossene Metallschicht dünner Wandstärke einen sicheren Diffusionsschutz. Darüber hinaus ist ein nach der Erfindung ausgebildetes, die optischen Fasern enthaltendes Röhrchen, problemlos mit den anderen Elementen des Verseilverbandes bei der Herstellung des Luftkabels oder Phasenseiles zu verseilen, eine nach außen glatte in sich geschlossene Oberfläche liefert nämlich keine Angriffspunkte für die während des Herstellungsprozesses wirkenden äußeren mechanischen Kräfte.

Die erfindungsgemäße metallische Auflage mit unmittelbarer Verbindung zur Oberfläche des zu beschichtenden Röhrchens beschränkt die Durchmesserzunahme auf ein Minimum, das gilt insbesondere dann, wenn in Weiterführung der Erfindung die Wanddicke der Metallschicht 5 bis 70 µm, vorzugsweise 15 bis 40 µm beträgt.

Werden zur Aufnahme der optischen Fasern metallische Röhrchen verwendet, etwa die heute in der Praxis auch üblichen Edelstahlröhrchen, dann ergeben sich besondere Vorteile dadurch, daß die Metallschicht mit der Oberfläche des Metallröhrchens metallurgisch verbunden ist. Diese Verbindung ist dauerhaft, sie sichert einen dauerhaften Korrosionsschutz innerhalb des Verseilverbandes des Luftkabels oder Leiterseiles, sie führt aber auch zu einer leichteren Handhabung des die optische Fasern enthaltenden Röhrchens während des Fertigungsprozesses.

Die nach der Erfindung vorgesehene in sich geschlossene Metallschicht dünner Wandstärke kann auf beliebigem Wege auf die Oberfläche des Röhrchens aufgebracht werden. So hat es sich als vorteilhaft erwiesen, wenn die Metallschicht aus einem längsnahtgeschweißten und durch Herunterziehen auf die Oberfläche des Metallröhrchens mit diesem metallurgisch verbundenen Metallband dünner Wanddicke besteht. Ein solches Plattierverfahren gewährleistet, daß das die optischen Fasern enthaltende und auf diese Weise korrosionsgeschützte Röhrchen problemlos auf- und abgewickelt und in den Verseilverband des Luftkabels oder Phasenseiles integriert werden kann.

Kommt es den jeweiligen Anforderungen entsprechend auf eine besonders dünnwandige, homogene Beschichtung an, dann kann man in Weiterführung der Erfindung auch so vorgehen, daß die Metallschicht aus einem gesinterten, homogenen Auftrag metallischer Partikel besteht.

Eine besonders vorteilhafte Lösung des der Erfindung zugrundeliegenden Problems besteht jedoch darin, daß die Metallschicht aus einem chemisch oder elektrochemisch aufgetragenen homogenen Überzug besteht. Die metallurgische Verbindung zur Röhrchenoberfläche ist gewährleistet, die Schicht ist homogen aufzubringen, diese Metallschicht ist aber auch diffusionsdicht. Eine Vielzahl von heute im Markt befindlichen Luftkabeln oder Erdseilen besteht aus einem optische Fasern enthaltenden Stahlröhrchen im Verband mit aluminiumplattierten zugfesten Stahldrähten und/oder elektrischen Aluminiumleitern. In diesem Fall wird vorteilhaft die metallische Auflage eine mit der Oberfläche des Stahlröhrchens metallurgisch verbundene Schicht aus Aluminium oder einer Aluminiumlegierung sein, die in einem Sinterprozeß aufgebracht oder aber auch chemisch oder elektrochemisch, beispielsweise elektrolytisch aufgebracht wird.

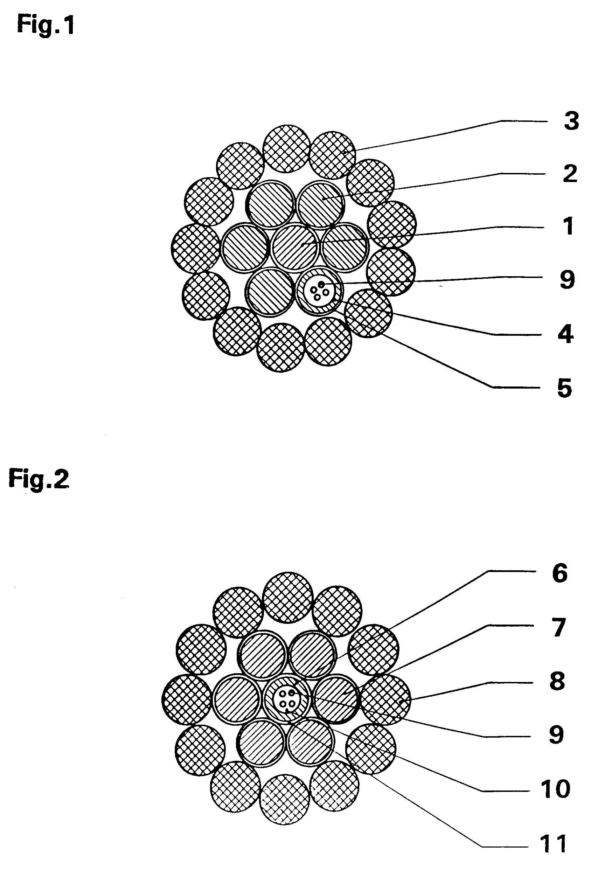

Die Erfindung sei anhand der in den Figuren 1 bis 3 dargestellten Ausführungsbeispiele näher erläutert.

Die Fig. 1 veranschaulicht ein sogenanntes Luftkabel, beispielsweise mit einem Außendurchmesser von etwa 12 mm, es weist einen inneren tragfähigen Kern 1 in Form eines aluminiumummantelten Stahldrahtes auf. Aufgeseilt auf diesen Kerndraht ist eine erste Lage aus ebenfalls aluminiumplattierten Stahldrähten 2, während die darüber befindliche Drahtlage aus den stromleitenden Aluminiumdrähten oder aluminiumlegierten Drähten 3 besteht. In der Drahtlage unmittelbar über dem Kerndraht 1 ist das Metallröhrchen 4 angeordnet, das aus Stahl, vorzugsweise Edelstahl, besteht und dessen Durchmesser dem der benachbarten aluminiumplattierten Stahldrähte 2 entspricht. Gefüllt ist dieses Metallröhrchen 4 mit einer Füllmasse beispielsweise einem thixotropen Füllgel, in dem die optischen Fasern 9 längseinlaufend mit einer definierten Überlänge eingebettet sind. Das Metallröhrchen 4 selbst weist die erfindungsgemäße, in sich geschlossene Metallschicht 5 dünner Wandstärke auf, sie besteht im vorliegenden Fall zur Vermeidung von Korrosionserscheinungen im Verseilverband aus Aluminium oder einer Aluminiumlegierung. Diese Metallschicht 5, vorzugsweise elektrolytisch in einer Dicke von 10 bis 20 µm aufgetragen, umschließt das Metallröhrchen 4 dicht mit glatter homogener Oberfläche und bietet daher den bei der Herstellung des Luftkabels wirkenden mechanischen Kräften keine Angriffspunkte.

Die Fig. 2 zeigt ein selbsttragendes Luftkabel, bei dem um ein zentrales Stahlröhrchen 6 eine Armierung aus aluminiumplattierten Stahldrähten 7 verseilt ist. Die Leiterelemente 8 bestehen aus Aluminium oder einer geeigneten Aluminiumlegierung. Im Innern des Stahlröhrchens 6 sind optische Fasern 9 angeordnet, sie weisen gegenüber der Länge des Stahlröhrchens 6 eine Überlänge von mindestens sechs Promille auf. Der Raum 10 im Innern des Stahlröhrchens kann wiederum mit einem Füllgel, beispielsweise auf Basis Petrojelly, gefüllt sein. Wesentlich für die Erfindung ist nun, daß das Stahlröhrchen 6 eine äußere Ummantelung 11 aufweist, im vorliegenden Fall wegen der für die anderen Elemente des Verseilverbandes verwendeten Materialien aus Aluminium oder einer Aluminiumlegierung. Die Wanddicke dieser Metallschicht beträgt beispielsweise 30 µm, sie ist beispielsweise dadurch hergestellt, daß um das Stahlröhrchen ein Aluminiumband herumgeformt, längsnahtverschweißt und dann auf das Röhrchen in mehreren Arbeitsgängen heruntergezogen worden ist. Diese Schicht kann aber auch dadurch erzeugt sein, daß das verwendete Aluminiummaterial in Form eines Pulvers beispielsweise vorzugsweise unter Schutzgas zur Vermeidung von Oxidationen aufgetragen und anschließend diese auftragene Schicht einem Sintervorgang unterworfen wird.

Eine andere Variante ist das bereits erwähnte elektrolytische Auftragen, beispielsweise auch unter Schutzgas, um eine diffusionsdichte, homogene Aluminiumschicht auf das Stahlröhrchen aufzubringen.

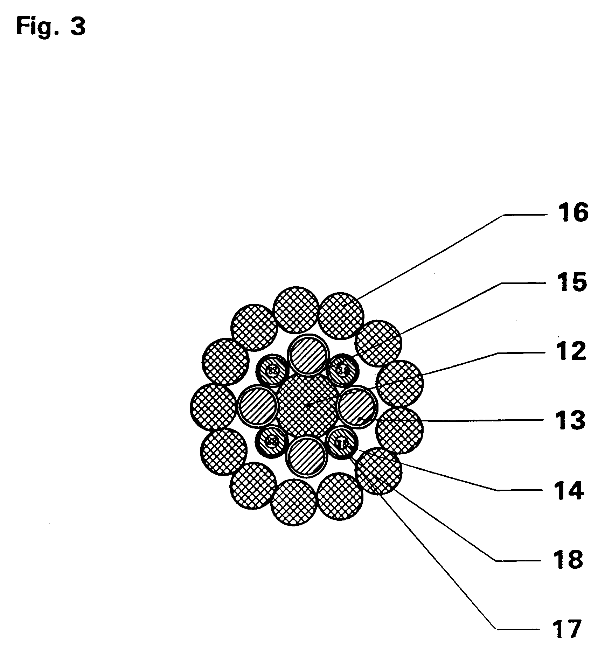

Eine weitere Ausführungsform der Erfindung zeigt die Fig. 3, hierbei sind über einem inneren Kernprofil 12, beispielsweise in Form eines Metalldrahtes, etwa aus Stahl oder Aluminium bzw. Stahl in plattierter Form in einer ersten Lage aluminiumumantelte Stahldrähte 13 als Armierungsdrähte sowie Stahlröhrchen 14 zur Aufnahme der optischen Fasern angeordnet. Wie die Fig. veranschaulicht, haben die zwischen jeweils zwei Armierungsdrähten 13 gelagerten Metallröhrchen einen kleineren Durchmesser als die benachbarten Armierungsdrähte, welche zusätzlich durch Einlegen in längsverlaufenden Nuten 15 des Kernprofiles 12 in ihrer Lage fixiert sind, so daß bei Biegungen des Kabels oder anderer mechanischer Belastung, beispielsweise in Form von Schwingungen im Betriebszustand, die metallischen Röhrchen geschützt sind. Die äußere, den Verband nach außen abschließende Lage besteht aus Aluminiumdrähten 16, die der Stromübertragung dienen.

Im Innern des Stahlröhrchens 14 sind die optischen Fasern 17 angeordnet, ihre Überlänge im Verseilverband ist durch den gewählten Verseilschlag gegeben, falls erforderlich, sind die optischen Fasern 17 auch mit Überlänge in das Metallröhrchen 14, beispielsweise aus Edelstahl, eingefahren. Die Metallröhrchen 14 weisen die erfindungsgemäße Auflage 18 in Form eines geschlossenen homogenen metallischen Überzuges dünner Wandstärke von beispielsweise 40 µm auf, auch diese Auflage kann entsprechend den bereits beispielhaft angeführten Herstellungsverfahren aufgebracht sein.

Anhand der Figuren ist die Erfindung für den Fall beschrieben, daß im Verband für die optischen Fasern Stahlröhrchen für die elektrischen Leiter Aluminiumdrähte und für die zugfesten Elemente aluminiumplattierte Stahldrähte verwendet werden. Für den Fall, daß abweichend von diesen heute in der Regel verwendeten Materialien andere leitfähige Metalle verwendet werden, beispielsweise Kupfer oder Kupferlegierungen ist zur Vermeidung von unterschiedlichem elektrischem Potential im Verseilverband für das die optischen Fasern schützende Röhrchen eine Auflage aus entsprechendem Material also auch aus Kupfer oder einer Kupferlegierung zu verwenden.

Darüber hinaus ist die Erfindung selbstverständlich nicht auf den Einsatz von Metallröhrchen im Verseilverband elektrischer Luftkabel oder Erdseile beschränkt, auch Kunststoffröhrchen, vorzugsweise in glasfaserverstärkter Form, können dort eine vorteilhafte Anwendung finden.

Wenn es beim Einsatz dieser Röhrchen auch weniger darum geht, den Verseilverband vor Korrosionserscheinungen zu schützen, kann es hier darauf ankommen, das verwendete Kunststoffröhrchen diffusionsdicht zu halten. Dies wird in Durchführung der Erfindung erreicht, indem die Oberfläche des Kunststoffröhrchens mit einer geschlossenen, homogenen Metallschicht dünner Wandstärke beschichtet wird. Auch wenn hier kein metallurgischer Verbund mit dem Material des Röhrchens möglich ist, gibt im Gegensatz zum bekannten Stand der Technik die Erfindung hier eine Lösung, wenn die auch gegen Feuchtigkeit empfindlichen optischen Fasern im Innern des Röhrchens sicher geschützt werden müssen.

Unabhängig von den in den Fig. 1 bis 3 dargestellten Ausführungsformen ist die vorliegende Erfindung überall dort einsetzbar, wo in derartigen selbsttragenden Luftkabeln Metallröhrchen zur Aufnahme von optischen Fasern dienen, wobei aufgrund der für die Metallröhrchen sowie für die weiteren Aufbauelemente verwendeten Werkstoffe Korrosionserscheinungen aufgrund unterschiedlicher elektrischer Potentiale zu erwarten sind.

## Patentansprüche

1. Elektrisches Luftkabel mit im Verseilverband von elektrischen Leitern und zugfesten Tragelementen angeordneten Lichtwellenleiterelementen aus optische Fasern enthaltenden Röhrchen mit einer metallischen Auflage, dadurch gekennzeichnet, daß diese Auflage eine in sich geschlossene Metallschicht dünner Wandstärke ist, welche unmittelbar mit der Oberfläche des Röhrchens in Verbindung steht.

2. Luftkabel nach Anspruch 1, dadurch gekennzeichnet, daß die Wanddicke der Metallschicht 5 - 70 µm, vorzugsweise 15 - 40 µm beträgt.

3. Luftkabel nach Anspruch 1 oder 2, mit einem die optischen Fasern enthaltenden Metallröhrchen, dadurch gekennzeichnet, daß die Metallschicht mit der Oberfläche des Metallröhrchens metallurgisch verbunden ist.

4. Luftkabel nach Anspruch 3, dadurch gekennzeichnet, daß die Metallschicht aus einem längsnahtgeschweißten und durch Herunterziehen auf die Oberfläche des Metallröhrchens mit diesem metallurgisch verbundenen Metallband dünner Wandstärke besteht.

5. Luftkabel nach Anspruch 1 oder 3, dadurch gekennzeichnet, daß die Metallschicht aus einem gesinterten, homogenen Auftrag metallischer Partikel besteht.

6. Luftkabel nach Anspruch 1 oder 3, dadurch gekennzeichnet, daß die Metallschicht aus einem chemisch oder elektrochemisch aufgetragenen, homogenen Überzug besteht.

7. Luftkabel nach Anspruch 1 oder einem der folgenden mit einem optische Fasern enthaltenden Stahlröhrchen, im Verband mit aluminiumplatierten zugfesten Stahldrähten und/oder elektrischen Aluminiumleitern, dadurch gekennzeichnet, daß die metallische Auflage eine mit der Oberfläche des Stahlröhrchens metallurgisch verbundene Schicht aus Aluminium oder einer Aluminiumlegierung ist.

8. Luftkabel nach Anspruch 1 oder 2, dadurch gekennzeichnet, daß die optische Fasern enthaltende Röhrchen aus einem Kunststoff, insbesondere aus einem glasfaserverstärkten Kunststoff bestehen.
